# EUROPÄISCHE PATENTSCHRIFT

(11) **EP 2 828 027 B1**
(45) Veröffentlichungstag und Bekanntmachung des Hinweises auf die Patenterteilung: **27.06.2018**
(21) Anmeldenummer: 13716167.5
(22) Anmeldetag: 11.03.2013
(51) Int. Cl.: B23K 9/095, B23K 9/10, G06F 3/045, G06F 3/0485, G06F 3/0484

(54) **SCHWEISSGERÄT MIT EINEM TOUCHSCREEN**
WELDING UNIT HAVING A TOUCHSCREEN
APPAREIL DE SOUDAGE À ÉCRAN TACTILE

(30) Priorität: 23.03.2012 AT 500962012
(43) Veröffentlichungstag der Anmeldung: 28.01.2015
(73) Patentinhaber: Fronius International GmbH, 4643 Pettenbach (AT)
(72) Erfinder: NIEDEREDER, Franz, A-4652 Fischlham (AT); NEUBACHER, Günther, A-4671 Neukirchen bei Lambach (AT); FRIEDL, Helmut, A-4621 Sipbachzell (AT); FRAUENSCHUH, Rupert, A-4621 Sipbachzell (AT)
(74) Vertreter: Sonn & Partner Patentanwälte
(86) Internationale Anmeldenummer: PCT/AT2013/050062
(87) Internationale Veröffentlichungsnummer: WO 2013/138831

(56) Entgegenhaltungen:
- EP-A1- 2 196 277
- JP-A- 2008 260 067
- US-A- 5 837 968
- US-A1- 2004 207 766
- US-A1- 2004 232 128
- US-A1- 2008 295 037
- US-A1- 2009 019 401
- US-A1- 2009 267 909
- US-A1- 2009 302 015
- US-A1- 2010 309 228
- US-S- D 613 300
- Josef Binkert ET AL: "Swiss Mechanic 09/2010", , 30 September 2010 (2010-09-30), page 18, XP055248253, Retrieved from the Internet: URL:http://www.swissmechanic.ch/documents/ 09_2010.pdf [retrieved on 2016-02-08]
- Aldo Tormen: "Vom Einmannbetrieb zum gefragten Zulieferer", , 31 December 2007 (2007-12-31), page 3, XP055248254, Retrieved from the Internet: URL:http://www.burtscher.com/sites/default /files/news/beschrieb_news_laserschweissen .pdf [retrieved on 2016-02-08]

## Beschreibung

Die Erfindung betrifft ein Schweißgerät, mit einem Anschluss für einen Schweißbrenner zur Durchführung eines Schweißprozesses, einer Stromquelle zur Versorgung des Schweißbrenners mit einem Schweißstrom, einer Steuervorrichtung, einer mit der Steuervorrichtung verbundenen und durch einen Touchscreen gebildeten Ein-/Ausgabeeinrichtung zur Ein-/Darstellung von für den Schweißprozess erforderlichen Parametern und Funktionen, welche an die Steuervorrichtung zur Ansteuerung bzw. Vorgabe entsprechender Sollwerte für die Regelung oder Steuerung der einzelnen Komponenten des Schweißgeräts weitergeleitet werden.

Für die Bedienung von Schweißgeräten und zur Ausführung verschiedenster Schweißprozesse, ist die Auswahl bzw. Einstellung verschiedenster Parameter und Funktionen erforderlich. Diese werden üblicher Weise mit verschiedenen Bedienelementen an der Stromquelle des Schweißgeräts, am Schweißbrenner, an einer Fernbedienung oder an einer anderen Komponente des Schweißgeräts, hauptsächlich vor Beginn des Schweißprozesses, aber auch währenddessen, ausgewählt und eingestellt. Unter den Begriff Parameter fallen dabei sowohl Schweißparameter, wie zum Beispiel der Schweißstrom, welche den Schweißprozess unmittelbar beeinflussen als auch andere Parameter, wie zum Beispiel Funktionsparameter, welche den Schweißprozess nicht direkt aber sehr wohl indirekt beeinflussen.

Jüngere Generationen an Schweißgeräten sind häufig mit Touchscreens ausgestattet, welche sowohl die Eingabe als auch die Ausgabe bzw. Anzeige der Parameter, Funktionen und dgl. zulassen. Beim Einsatz von Touchscreens in Schweißgeräten sind die einzelnen einstellbaren Parameter oder Funktionen üblicherweise fixen Positionen zugeordnet, die vom Benutzer oder Schweißer angewählt werden können. Dabei müssen vom Benutzer häufig verschiedene Oberflächen bzw. Masken am Touchscreen aufgerufen werden, was die Bedienung sehr erschwert, da der Benutzer nicht immer weiß auf welcher Oberfläche bzw. Maske sich der jeweilige Parameter oder die benötigte Funktion befindet.

Die gattungsgemäße US 2004/232128 A1 beschreibt einen Fernregler für ein Schweißgerät, der eine menügeführte Darstellung der Parameter, Funktionen und Betriebsarten zulässt, wodurch eine sehr übersichtliche und sehr einfach Bedienung des Fernreglers erreicht wird. Die Auswahl und Einstellung der Parameter, Funktionen und dgl. ist jedoch nur bei ausgezogenen Schweißhandschuhen über den Touchscreen möglich.

Die US 5,837,968 A und die EP 2 196 277 A1 beschreiben Schweißgeräte mit Touchscreens als Ein-/Ausgabeeinrichtung und allenfalls zusätzlichen Bedienelementen, welchen jeweils eine bestimmte Eigenschaft zugeordnet ist. Eine vielfältige flexible Einstellung verschiedenster Parameter und allenfalls eine Bedienung mit Schweißhandschuhen ist jedoch nicht möglich.

Ähnliche Darstellungsmethoden sind beispielsweise aus der US D613,300 S1, der US 2008/295037 A1 oder der US 2009/0267909 A1 bekannt geworden, wobei nicht auf die Besonderheiten bei einem Schweißgerät und dessen Bedienung eingegangen wird.

Die Aufgabe der vorliegenden Erfindung besteht in der Schaffung eines oben genannten Schweißgeräts, mit welchem Parameter, Funkkionen und dgl. vor, während oder nach dem Schweißprozess möglichst einfach, rasch und intuitiv eingestellt und abgerufen werden können. Von Vorteil ist es, wenn die Einstellungen durch den Benutzer bzw. Schweißer auch mit Schweißhandschuhen vorgenommen werden können. Nachteile bekannter Schweißgeräte mit Touchscreens sollen vermieden oder zumindest reduziert werden.

Gelöst wird die erfindungsgemäße Aufgabe durch ein oben genanntes Schweißgerät, bei dem die Steuervorrichtung zur sequentiellen und umlaufenden Darstellung von Parametern und Einstellung der Parameter des Schweißprozesses in einem Hauptbereich des Touchscreens in Form eines Parameter-Karussells ausgebildet ist, wobei die Parameter, die im Parameter-Karussell dargestellt werden sollen, und deren Reihenfolge individuell festlegbar ist und der einstellbare Parameter des Schweißprozesses zentral im Hauptbereich hervorgehoben dargestellt ist, die Steuervorrichtung zur gleichzeitigen Darstellung zumindest eines vorausgehenden und zumindest eines nachfolgenden Parameters der Sequenz an Parametern des Schweißprozesses neben dem zentral dargestellten, einstellbaren Parameter im Hauptbereich des Touchscreens ausgebildet ist, dass eine transparente Schutzabdeckung für den Touchscreen vorgesehen ist, und im Bereich des Touchscreens ein kombiniertes, durch einen Dreh-/Drückregler gebildetes, Bedienelement zur Auswahl und Veränderung der Parameter und Funktionen des Schweißprozesses angeordnet ist, wobei durch Drehen des Dreh-/Drückreglers ein anderer Parameter bzw. eine andere Ansicht am Touchscreen auswählbar ist und der Wert eines Parameters stufenlos einstellbar ist und durch Druck auf den Dreh-/Drückregler die Auswahl bzw. der Wert eines Parameters bestätigbar ist, sodass eine Einstellung und Veränderung der Parameter und Funktionen des Schweißprozesses über den Touchscreen vor der Durchführung des Schweißprozesses als auch über das kombinierte Bedienelement auch bei abgedecktem Touchscreen durch den Benutzer auch mit Schweißhandschuhen einstellbar und veränderbar sind und die Parameter und Funktionen das Schweißprozesses überwachbar sind. Die Parameter werden also in einer Art Karussell umlaufend am Touchscreen dargestellt, was die Auswahl und Einstellung der Parameter durch den Benutzer wesentlich erleichtert. Durch Berührung des Touchscreens kann das Parameter-Karussell gedreht werden und rasch und einfach jener Parameter, der eingestellt werden soll, ausgewählt werden. Dieser ausgewählte Parameter wird im Zentrum des Touchscreens hervorgehoben dargestellt und kann durch direkte Berührung des Touchscreens oder durch Betätigung eines anderen Bedienelements entsprechend eingestellt werden. Das erfindungsgemäße Schweißgerät ermöglicht also sowohl eine vielfältige Einstellung verschiedenster Parameter über den Touchscreen vor der Durchführung des Schweißprozesses als auch eine Einstellung bzw. Auswahl bestimmter Parameter über ein anderes Bedienelement während der Durchführung des Schweißprozesses. Der erfindungsgemäß ausgebildete Touchscreen kann statt an der Stromquelle des Schweißgeräts oder zusätzlich auch an einer Fernbedienung, einem Drahtvorschubgerät, usw. angeordnet sein, welche über entsprechende Leitungen oder drahtlos mit der Stromquelle des Schweißgeräts verbunden sind. In diesem Fall werden die Parameter über diesen Touchscreen und allenfalls ein Bedienelement an der Fernbedienung, dem Drahtvorschubgerät usw. eingestellt. Gegenüber herkömmlichen Schweißgeräten, welche Touchscreens mit vielen Bedienungselementen kombinieren, ist das gegenständliche Schweißgerät übersichtlicher. Zum Schutz des Touchscreens vor Schweißspritzern oder dgl. ist eine transparente Schutzabdeckung vorgesehen. Das kombinierte Bedienelement ist dabei außerhalb dieser Schutzabdeckung angeordnet, sodass eine Bedienung des Bedienelements auch bei abgedecktem Touchscreen möglich ist. Dadurch wird eine Bedienung des kombinierten Bedienelements in der Nähe des Touchscreens auch während des Schweißprozesses, während dem der Touchscreen mit der Schutzabdeckung abgedeckt ist, ermöglicht.

Im Bereich des Touchscreens ist ein kombiniertes, durch einen Dreh-/Drückregler gebildetes Bedienelement zur Auswahl und Veränderung der Parameter, Funktionen und dgl. angeordnet. Dadurch wird also eine Ein-/Ausgabe mit Hilfe eines Touchscreens mit dem kombinierten Bedienelement, welches sich auch mit Schweißhandschuhen leicht betätigen lässt, kombiniert. Unter den Begriff des kombinierten Bedienelements fallen verschiedene Bedienelemente, welche die Kombination bestimmter Funktionen zulassen. Insbesondere soll eine Kombination einer stufenlosen oder stufigen Einstellung eines Werts eines Parameters mit einer Bestätigung oder Auswahl des Parameters möglich sein. Der am Touchscreen ausgewählte Parameter wird im Zentrum des Touchscreens hervorgehoben dargestellt und kann entweder durch direkte Berührung des Touchscreens oder durch Betätigung des kombinierten Bedienelements entsprechend eingestellt werden. Das mit einem kombinierten Bedienelement versehene Schweißgerät ermöglicht also sowohl eine vielfältige Einstellung verschiedenster Parameter über den Touchscreen vor der Durchführung des Schweißprozesses als auch eine Einstellung bzw. Auswahl bestimmter Parameter über das kombinierte Bedienelement während der Durchführung des Schweißprozesses. Im Gegensatz zu Schweißgeräten, welche lediglich mit einem Touchscreen ausgestattet sind, ist beim Schweißgerät mit einem kombinierten Bedienelement die Bedienung über dieses kombinierte Bedienelement auch mit Schweißhandschuhen möglich. Der Benutzer muss vor einer Bedienung nicht die Schweißhandschuhe ausziehen. Gegenüber herkömmlichen Schweißgeräten, welche Touchscreens mit vielen Bedienungselementen kombinieren, ist das gegenständliche Schweißgerät übersichtlicher. Mit dem kombinierten Bedienelement können nicht nur bestimmte Werte für einen Parameter, eine Funktion und dgl. eingestellt oder Parameter, Funktionen und dgl. ausgewählt werden, sondern auch eine Steuerung der Oberfläche des Touchscreens vorgenommen werden. Ein Dreh-/Drückregler stellt eine einfache Realisierung eines kombinierten Bedienelements dar. Durch Druck auf den Dreh-/Drückregler kann die Auswahl bzw. der Wert eines Parameters bestätigt werden, und durch Drehen des Dreh-/Drückreglers erfolgt eine stufenlose Einstellung des Werts des Parameters oder die Auswahl eines anderen Parameters bzw. einer anderen Ansicht am Touchscreen. Eine entsprechende Größe des Bedienelements vorausgesetzt, kann dieses auch besonders bequem mit angezogenen Schweißhandschuhen betätigt werden.

Die Steuervorrichtung ist zur Darstellung zumindest eines vorausgehenden und zumindest eines nachfolgenden Parameters der Sequenz an Parametern neben dem zentral dargestellten, einstellbaren Parameter im Hauptbereich des Touchscreens ausgebildet. Die Parameter werden also in Form eines Parameter-Karussells am Touchscreen dargestellt, was die Auswahl und Einstellung der Parameter durch den Benutzer erleichtert. Durch Betätigung des kombinierten Bedienelements und bzw. oder Berührung des Touchscreens kann das Parameter-Karussell gedreht werden und rasch und einfach jener Parameter, der eingestellt werden soll, ausgewählt werden. Dieser ausgewählte Parameter wird im Zentrum des Touchscreens im sogenannten Selektionsmodus dargestellt. Dadurch wird in vorteilhafter Weise erreicht, dass der Benutzer den aktuell einzustellenden Parameter, der immer im Zentrum des Hauptbereichs des Touchscreens angeordnet ist, sieht und zusätzlich zumindest zwei benachbarte Parameter, die als nächster auswählbar sind, wahrnehmen kann. Somit kann der Benutzer die Auswahl des nächsten Parameters, der eingestellt werden soll, durch eine Bewegung des Parameter-Karussells nach links oder rechts, rasch und einfach durchführen.

Dabei wird der einstellbare Parameter vorzugsweise größer als der zumindest eine vorausgehende und der zumindest eine nachfolgende Parameter der Sequenz am Touchscreen dargestellt. Auf diese Weise wird jener Parameter, der eingestellt werden kann, am Touchscreen entsprechend hervorgehoben. Zusätzlich kann auch durch verschiedene grafische Effekte, wie zum Beispiel einer Umrandung oder einer farbigen Darstellung, der ausgewählte Parameter hervorgehoben werden. Sobald ein Parameter im Karussell durch Berührung des Touchscreens oder Betätigen des allenfalls vorhandenen kombinierten Bedienelements ausgewählt wurde, kann dieser in seinem Wert verändert werden. Dabei wird vorzugsweise je nach Voreinstellungen eine Skala mit dem möglichen Einstellbereich des Parameters als auch dem aktuell eingestellten Wert angezeigt.

Gemäß einem weiteren Merkmal der Erfindung ist ein Bedienbereich am Touchscreen zur Änderung der Sequenz an Parametern am Touchscreen vorgesehen. Um das Schweißgerät an die individuellen Bedürfnisse des Benutzers anpassen zu können, sind die Parameter, welche im Karussell dargestellt und angeordnet werden und deren Reihenfolge einstellbar.

Am Touchscreen kann auch ein Bedienbereich zur Darstellung eines ausgewählten Parameters als Kurvenverlauf in Abhängigkeit der Zeit vorgesehen sein. Durch Betätigung dieses Bedienbereichs am Touchscreen wird ein Darstellungsmodus (Schweißkurvenansicht) gewählt und der ausgewählte Parameter als Kurve in Abhängigkeit der Zeit dargestellt. Auch für komplexe Abläufe, wie zum Beispiel Schweißstartvorgänge, kommen solche Kurvendarstellungen zum Einsatz. Das ist für verschiedene Schweißprozesse/Detailabläufe von großem Vorteil. Beispielsweise kann der Schweißstrom in Abhängigkeit der Zeit grafisch am Touchscreen bzw. in einem Bereich des Touchscreens dargestellt werden, um dem Benutzer eine Übersicht über den zeitlichen Verlauf des Schweißstromes während des Schweißprozesses zu liefern.

Am Touchscreen ist vorzugsweise im oberen Bereich eine Statuszeile zur Darstellung des Status des eingestellten Schweißprozesses, und zumindest eine vorzugsweise seitlich angeordnete Menüleiste zur Darstellung von Bedienbereichen zur Auswahl von Parametern oder Vornahme von Einstellungen vorgesehen. In der Statuszeile werden dem Benutzer Informationen in Textform oder in Form von Symbolen oder Icons zu wichtigen Einstellungen, aktivierten Funktionalitäten, angemeldetem Benutzer, Zeit, Datum und vorliegenden Fehlern und dgl. wiedergegeben.

Am Touchscreen kann ein Bedienbereich zur Umschaltung auf einen Vollbildmodus vorgesehen sein, in welchem die zumindest eine (vorzugsweise die an der rechten und linken Seite angeordnete) Menüleiste ausgeblendet ist und der Hauptbereich des Touchscreen vergrößert dargestellt ist. Durch diese Umschaltung in den Vollbildmodus wird der Touchscreen auf die wesentlichen Ansichten eingeschränkt und es werden unwesentlichere Einstellmöglichkeiten oder Informationen ausgeblendet. Der Vollbildmodus kann als vereinfachte bzw. reduzierte Darstellung der Bedienoberfläche angesehen werden.

Wenn eine mit der Steuervorrichtung verbundene Schnittstelle am Schweißgerät vorgesehen ist, können verschiedene Daten oder Programme aus dem Schweißgerät exportiert oder in das Schweißgerät importiert werden. Die Schnittstelle ist vorzugsweise im Bereich der Ein- und/oder Ausgabevorrichtung angeordnet. Darüber hinaus können über die Schnittstelle neue Anzeigeoberflächen bzw. Layouts für den Touchscreen eingespielt oder die vom Benutzer direkt am Schweißgerät angepassten Oberflächen oder dgl. ausgelesen werden. Beispielsweise können über eine USB (Universal Serial Bus)-Schnittstelle individuelle Einstellungen eines Schweißprozesses auf einen externen Speicher, insbesondere einen USB-Stick, ausgelagert und beispielsweise für eine Verwendung bei einem anderen Schweißgerät bereitgestellt werden. Über einen an einem USB-Anschluß angeschlossenen WLAN (Wireless Local Area Network)-Adapter kann auch eine Verbindung mit lokalen Netzwerken oder dem Internet hergestellt werden. Es können auch andere Schnittstellen, wie zum Beispiel Ethernet-Schnittstellen, zur Verbindung des Schweißgeräts mit lokalen Netzwerken oder dem Internet zur Verfügung gestellt werden. Über derartige Schnittstellen kann auch eine Fernwartung des Schweißgeräts und ein Update der Software vorgenommen werden.

Im Bereich des Touchscreens kann zumindest eine Funktionstaste angeordnet sein. Beispielsweise kann als solche Funktionstaste eine Taste zum Auslösen eines Vorgangs zum Einfädeln eines Schweißdrahts oder eine Taste zum Auslösen eines Vorgangs zum Prüfen der benötigten Menge eines Schutzgases, vorgesehen sein. Derartige externe Funktionstasten werden insbesondere für häufig aufzurufende Funktionen eingesetzt, sodass über einen einzigen Druck auf eine Funktionstaste bestimmte Steuerabläufe, Istwert-Erfassungen, usw. rasch und einfach ausgeführt werden können. Somit kann die jeweilige Funktion, wie zum Beispiel der Einfädelvorgang des Schweißdrahts, durch einmaligen Druck auf die Funktionstaste ausgelöst werden. Eine entsprechende Größe der Taste vorausgesetzt, ist eine bequeme Bedienung auch mit Schweißhandschuhen möglich.

Wenn die Steuervorrichtung zur Darstellung einer Skala jenes Bereichs, innerhalb welchem der Parameter einstellbar ist, ausgebildet ist, kann dem Benutzer in besonders übersichtlicher Weise der Bereich, innerhalb dessen er eine Einstellung des Parameters mit dem Bedienelement vornehmen kann, wiedergegeben werden. Dabei ist von Vorteil, wenn die Einstellbereiche für unterschiedliche Schweißprozesse und bzw. oder Parameter verändert und die Einstellbereiche flexibel angepasst werden können. Somit stehen dem Benutzer immer die optimalen Bereiche zur Verfügung. Die Skala kann beispielsweise in Form eines Kreises oder Kreissektors oder in Balkenform dargestellt werden.

Dabei ist die Skala vorzugsweise an die eingestellten Parameter des Schweißprozesses und bzw. oder an eingesetzte Komponenten des Schweißgeräts, insbesondere die Stromquelle, angepasst. In Abhängigkeit der weiteren eingestellten Parameter des Schweißprozesses wird also für den aktuell ausgewählten Parameter automatisch die Skala bzw. der Bereich dargestellt, innerhalb welchem eine Einstellung erfolgen kann. Beispielsweise wird bei Auswahl des Parameters der Fördergeschwindigkeit des Schweißdrahts für den ausgewählten Schweißprozess automatisch der Bereich der sinnvoll möglichen Drahtfördergeschwindigkeiten dargestellt. Aus diesem dargestellten Bereich auf der Skala kann der Benutzer durch Betätigung des Bedienelements oder entsprechende Berührung des Touchscreens den gewünschten Wert auswählen. Die automatische Zuordnung der Skala erfolgt beispielsweise durch entsprechende hinterlegte Funktionen oder Tabellen. Diese Funktionen oder Tabellen enthalten also für jeden einstellbaren Parameter in Abhängigkeit der ausgewählten weiteren Parameter des Schweißprozesses die Bereiche, innerhalb derer der Wert des Parameters variiert werden kann.

Wenn ein Speicher zum Speichern der eingestellten Parameter eines Schweißjobs zusammen mit einer eindeutigen Identifikation für den Schweißjob vorgesehen ist, kann der Benutzer seine individuellen Einstellungen für einen bestimmten Schweißjob für eine Dokumentation oder spätere Verwendung aufheben.

Wie bereits oben erwähnt, kann der Touchscreen an der Stromquelle und bzw. oder einer Komponente des Schweißgeräts, insbesondere einem Drahtvorschubgerät, einem Fernregler usw. angeordnet sein.

Die vorliegende Erfindung wird anhand der beigefügten Zeichnungen, welche Ausführungsbeispiele eines Schweißgeräts und eines Touchscreens eines Schweißgeräts zeigen, näher erläutert. Darin zeigen:
- Fig. 1: eine schematische Darstellung eines Schweißgeräts;
- Fig. 2: die Ansicht einer Stromquelle eines Schweißgeräts mit Touchscreen;
- Fig. 3: eine Ansicht auf eine Bedienungseinheit einer Stromquelle eines Schweißgeräts mit Touchscreen;
- Fig. 4: eine Ansicht auf den Touchscreen im Vollbildmodus im Selektionsmodus;
- Fig. 5: eine Ansicht auf den Touchscreen im Vollbildmodus im Einstell-Modus;
- Fig. 6: eine weitere Ansicht auf den Touchscreen im Vollbildmodus im Einstell-Modus; und
- Fig. 7: eine Ansicht auf den Touchscreen im Kurvenansicht-Modus.

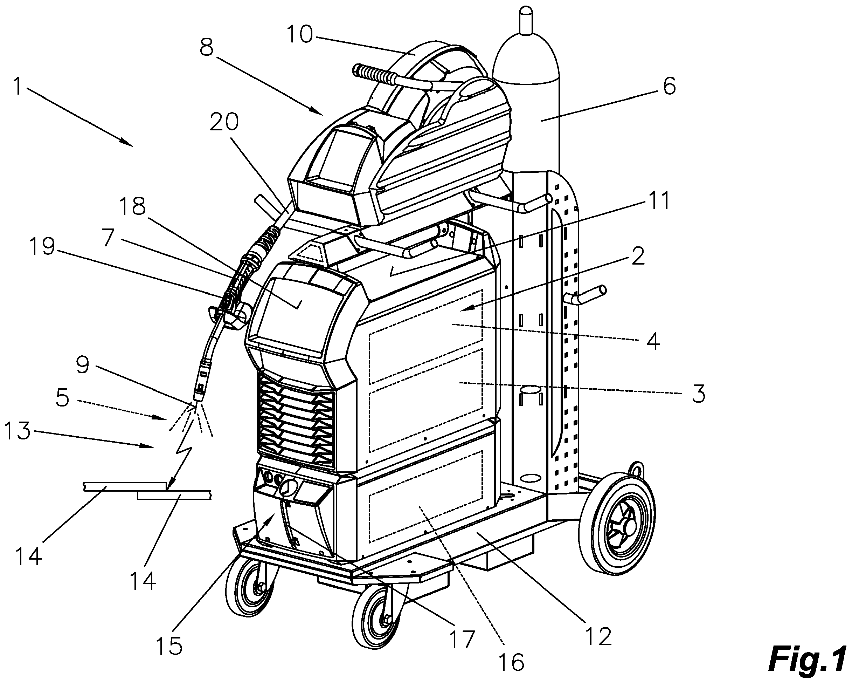

Fig. 1 zeigt ein schematische Darstellung eines Schweißgeräts 1 für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw. Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventilen, usw. Die Stromquelle 2 und deren Komponenten sind in einem entsprechenden Gehäuse 11 angeordnet. Die Steuervorrichtung 4 ist beispielsweise mit einem Steuerventil verbunden, welches in einer Versorgungsleitung für ein Schutzgas, wie beispielsweise CO₂, Helium oder Argon und dgl., zwischen einem Gasspeicher 6 und einem Schweißbrenner 7 angeordnet ist. Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle oder einer externen Fassspule (Drahtfass) in den Bereich des Schweißbrenners 7 zugeführt wird. Selbstverständlich kann das Drahtvorschubgerät 8, im Schweißgerät 1, insbesondere im Gehäuse 11 der Stromquelle 2, integriert und nicht, wie in Fig. 1 dargestellt, als Zusatzgerät auf einem Fahrwagen 12 positioniert sein. Weiters kann das Drahtvorschubgerät 8 auch direkt auf das Schweißgerät 2 aufgesetzt werden, indem das Gehäuse 11 der Stromquelle 2 an der Oberseite zur Aufnahme des Drahtvorschubgeräts 8 ausgebildet ist. In diesem Fall kann der Fahrwagen 12 auch entfallen. Das Drahtvorschubgerät 8 kann den Schweißdraht 9 auch außerhalb des Schweißbrenners 7 an die Prozessstelle zuführen, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13 zwischen der Elektrode bzw. dem Schweißdraht 9 und einem Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt. Das zu verschweißende Werkstück 14 ist über eine weitere Schweißleitung für das weitere Potential, insbesondere das Masse-Kabel, mit der Stromquelle 2 verbunden, sodass über den Lichtbogen 13 ein Stromkreis aufgebaut werden kann.

Zum Kühlen des Schweißbrenners 7 kann dieser über eine Kühleinrichtung 15 unter Zwischenschaltung allfälliger Komponenten, wie beispielsweise einem Strömungswächter, mit einem Flüssigkeitsbehälter, insbesondere einem Wasserbehälter 16 mit einer Füllstandsanzeige 17, verbunden werden. Die einzelnen Komponenten der Schweißanlage, also die Stromquelle 2, das Drahtvorschubgerät 8 und die Kühleinrichtung 15, sind dabei derart ausgebildet, dass sie sicher übereinander gestapelt bzw. aufeinander gestellt werden können.

Das Schweißgerät 1, insbesondere die Stromquelle 2, weist weiters eine Ein-/Ausgabeeinrichtung 18 auf, über die die unterschiedlichsten Parameter, Betriebsarten oder Schweißprogramme des Schweißgeräts 1 eingestellt bzw. aufgerufen und angezeigt werden können. Dabei werden die über die Ein-/Ausgabeeinrichtung 18 eingestellten Parameter, Betriebsarten oder Schweißprogramme an die Steuervorrichtung 4 weitergeleitet und von dieser werden anschließend die einzelnen Komponenten des Schweißgeräts 1 angesteuert bzw. entsprechende Sollwerte für die Regelung oder Steuerung vorgegeben. Bei Verwendung eines entsprechenden Schweißbrenners 7 mit einer Schweißbrenner-Ein-/Ausgabeeinrichtung 19 können Einstellvorgänge auch über den Schweißbrenner 7 vorgenommen werden. Bevorzugt ist dabei der Schweißbrenner 7 über Daten- und Versorgungsleitungen mit dem Schweißgerät 1, insbesondere der Stromquelle 2 oder dem Drahtvorschubgerät 8 verbunden. Zum Starten des Schweißprozesses weist der Schweißbrenner 7 meist einen Startschalter (nicht dargestellt) auf, sodass durch Betätigen des Startschalters der Lichtbogen 13 gezündet werden kann.

Weiters ist in dem dargestellten Ausführungsbeispiel der Schweißbrenner 7 über ein Schlauchpaket 20 mit dem Schweißgerät 1 verbunden. Im Schlauchpaket 20 sind die einzelnen Leitungen, wie beispielsweise die Versorgungsleitung bzw. Leitungen für den Schweißdraht 9, für das Gas 5, für den Kühlkreislauf, für die Datenübertragung, usw., vom Schweißgerät 1 zum Schweißbrenner 7 angeordnet, wogegen das Masse-Kabel bevorzugt extra an der Stromquelle 2 angeschlossen wird.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 7 als luftgekühlter Schweißbrenner 7 ausgeführt werden kann, sodass beispielsweise die Kühleinrichtung 15 entfallen kann. Man kann also sagen, dass das Schweißgerät 1 zumindest durch die Stromquelle 2, das Drahtvorschubgerät 8 und die Kühleinrichtung 15 gebildet wird, wobei diese auch in einem gemeinsamen Gehäuse 11 angeordnet sein können.

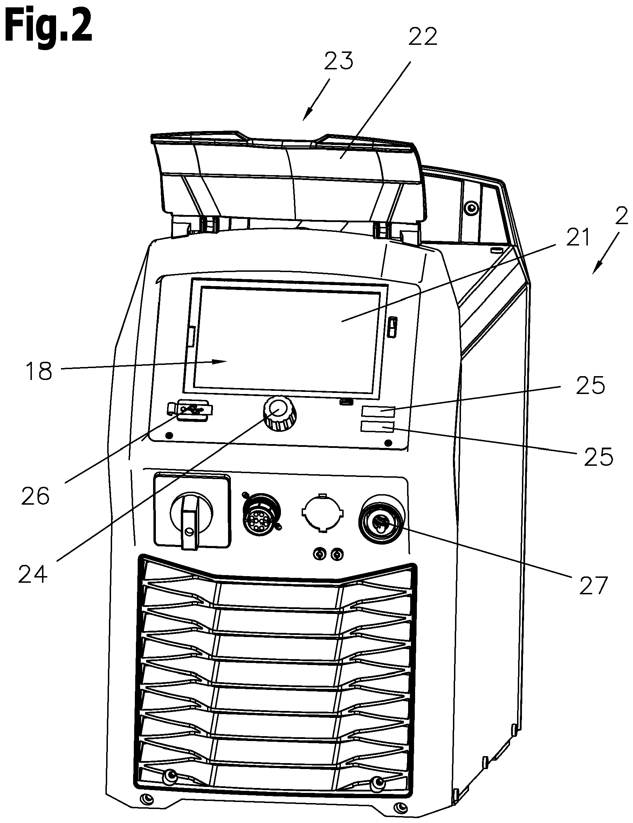

Fig. 2 zeigt eine Ansicht auf eine Stromquelle 2 eines Schweißgeräts 1 mit einer durch einen Touchscreen 21 gebildeten Ein-/Ausgabeeinrichtung 18 zur Einstellung von Parametern des Schweißprozesses. Der Touchscreen 21 ist vorzugsweise in resistiver Touch-Technologie ausgebildet, um eine Bedienung nicht nur mit den Fingern des Benutzers sondern auch mit einem Eingabestift oder dgl. zu ermöglichen. Die Größe des Touchscreens 21 hängt von der Größe der Stromquelle 2 oder anderen Komponente des Schweißgeräts 1 und der Vielfalt an darzustellenden Parametern, Funktionen und dgl. und Bedienmöglichkeiten ab. Der empfindliche Touchscreen 21 kann durch eine bevorzugt transparente Schutzabdeckung 22, die schwenkbar mit dem Schweißgerät 1 verbunden ist, während der Durchführung des Schweißprozesses geschützt werden. Im dargestellten Ausführungsbeispiel kann die Schutzabdeckung 22 über den Touchscreen 21 geklappt werden. Andere Mechanismen, wie zum Beispiel über den Touchscreen 21 schiebbare Schutzabdeckungen 22 (nicht dargestellt) sind ebenfalls möglich. Die Schutzabdeckung 22 weist eine Ausnehmung 23 auf, welche bei zugeklappter Schutzabdeckung 22 ein in der Nähe des Touchscreens 21 befindliches allfälliges kombiniertes Bedienelement 24 freihält, so dass eine Betätigung des kombinierten Bedienelements 24 auch bei abgedecktem Touchscreen 21 möglich ist. Das Bedienelement 24 ist vorzugsweise seitlich oder unterhalb des Touchscreens 21 angeordnet. Selbstverständlich können mit dem Bedienelement 24 dieselben Änderungen und Einstellungen vorgenommen werden, wie direkt am Touchscreen 21 selbst. Somit kann der Benutzer während der Durchführung des Schweißprozesses bestimmte Einstellungen von Parametern auch mit angezogenen Schweißhandschuhen über das kombinierte Bedienelement 24 ändern. Das kombinierte Bedienelemente 24 ist vorzugsweise durch einen Dreh-/Drückregler ausgebildet, welcher zumindest zwei Funktionen ausführen kann. Neben dem kombinierten Bedienelement 24 können Funktionstasten 25 zum Auslösen verschiedener öfter wiederkehrender Funktionen, wie zum Beispiel dem Einfädeln des Schweißdrahts 9 oder dem Durchführen eines Schutzgasprüfvorgangs vorgesehen sein. Weiters kann an der Stromquelle 2 eine Schnittstelle 26, beispielsweise eine US-B-Schnittstelle angeordnet sein, um eine Verbindung des Schweißgeräts 1 mit externen Geräten zur Vornahme eines Daten bzw. Informationsaustauschs zu ermöglichen. Weiters können Schnittstellen, insbesondere Ethernet-Schnittstellen, zur Verbindung des Schweißgeräts 1 bzw. der Stromquelle 2 mit einem lokalen Netzwerk oder dem Internet vorgesehen sein (nicht dargestellt), die bevorzugt an der Rückseite des Schweißgeräts 1 angeordnet werden. Über einen Anschluss 27 wird ein Massekabel (nicht dargestellt) mit der Stromquelle 2 verbunden.

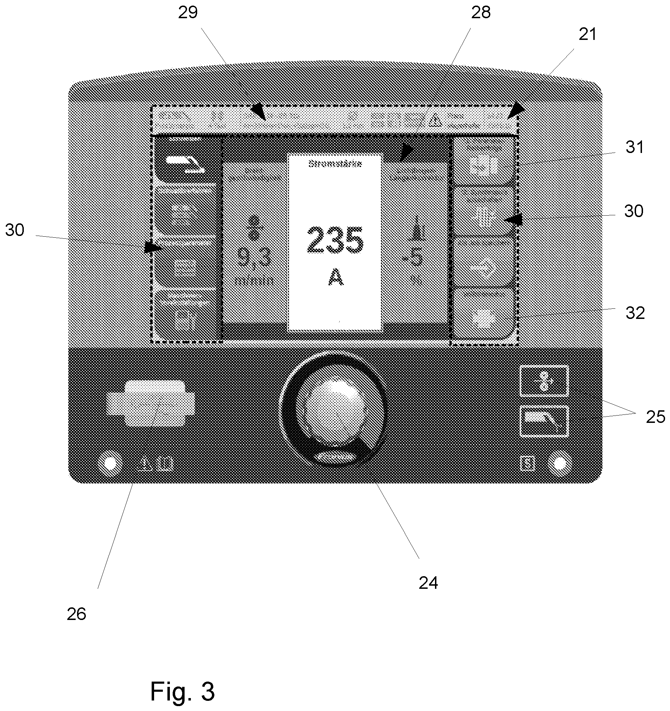

In Fig. 3 ist eine Ansicht auf eine Bedienungseinheit einer Stromquelle 2 eines Schweißgeräts 1 mit Touchscreen 21 vergrößert dargestellt. Der die Ein-/Ausgabeeinrichtung 18 bildende Touchscreen 21 beinhaltet einen Hauptbereich 28, in welchem die einzustellenden Parameter dargestellt werden und eingestellt bzw. verändert werden können. Erfindungsgemäß werden die Parameter in sequentieller und umlaufender Darstellung im Hauptbereich 28 des Touchscreens 21 dargestellt. Der jeweils ausgewählte und einstellbare Parameter wird im Zentrum des Hauptbereichs 28 hervorgehoben dargestellt. Zumindest ein vorausgehender und nachfolgender Parameter der Sequenz wird links bzw. rechts vom ausgewählten und einstellbaren Parameter dargestellt. Im dargestellten Beispiel werden somit gleichzeitig drei Parameter im Hauptbereich 28 des Touchscreens 21 angezeigt, wobei jedoch immer nur der im Zentrum dargestellte hervorgehobene Parameter veränderbar bzw. einstellbar ist. Der ausgewählte und einstellbare Parameter, im dargestellten Beispiel die Stromstärke wird gegenüber den anderen dargestellten Parametern hervorgehoben, indem er größer und beispielsweise farbig oder eingerahmt dargestellt wird. Der Benutzer kann die einzelnen Parameter verschieben, sodass je nach Notwendigkeit die unterschiedlichsten Parameter in das Zentrum des Hauptbereichs 28 bewegt werden können. Das Bewegen der Parameter erfolgt in Form eines sogenannten Parameter-Karussells, wobei immer der dem zentralen Parameter benachbart angezeigte Parameter je nach Drehrichtung in das Zentrum verschoben wird, und anschließend ein anderer Parameter oder derjenige von der zuvor gegenüberliegenden Seite dargestellte Parameter neben dem zentralen Parameter angezeigt wird. Im Hauptbereich 28 des Touchscreens 21 wird also eine ungerade Zahl von Parametern angezeigt, wobei der im Zentrum befindliche Parameter hervorgehoben wird. Beispielsweise werden also drei, fünf, sieben, usw. Parameter im Hauptbereich 28 dargestellt. Durch diese Art der Darstellung hat der Benutzer die Möglichkeit, die Parameter in Form eines Karussells in beide Richtungen, also nach links oder rechts, zu verschieben und rasch den gewünschten Parameter im Zentrum des Touchscreens 21 anzuordnen.

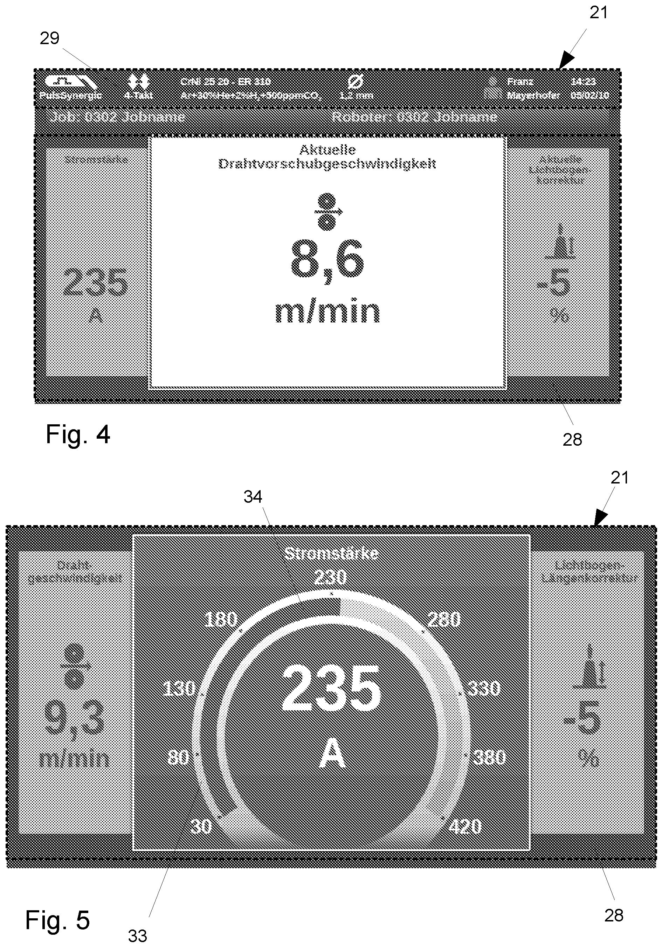

Vorzugsweise oberhalb des Hauptbereichs 28 des Touchscreens 21 befindet sich eine Statuszeile 29, über welche Informationen in Form von Text oder Icons zu wichtigen Einstellungen, aktivierten Funktionalitäten, angemeldetem Benutzer, Zeit, Datum und vorliegenden Fehlern wiedergegeben werden. Beiderseits des Hauptbereichs 28 des Touchscreens 21 befinden sich Menüleisten 30, welche Bedienbereiche zur Navigation oder zur Einstellung häufiger Funktionen enthalten. In der rechten Menüleiste 30 ist ein Bedienbereich 31 dargestellt, über den die im Karussell dargestellten Parameter und deren Reihenfolge ausgewählt bzw. geändert werden können. Somit kann der Benutzer die Stromquelle 2 individuell auf seine Bedürfnisse einstellen und jene Parameter auswählen, welche er während des Schweißprozesses einstellen, verändern oder überwachen möchte. Der Benutzer kann die Parameter, die im Parameter-Karussell dargestellt werden sollen, und deren Reihenfolge individuell festlegen, wodurch eine optimale Anpassung erzielt wird und immer die wichtigsten Parameter für den Schweißprozess zur Verfügung stehen. Über einen weiteren Bedienbereich 32 (hier der unterste Bedienbereich in der rechten Menüleiste 30) kann eine Umschaltung in den sogenannten Vollbildmodus vorgenommen werden, welcher anhand Fig. 4 näher erläutert wird. Die jeweiligen Bedienbereiche 31, 32 in den Menüleisten 30 sind vorzugsweise mit selbsterklärenden Piktogrammen und bzw. oder kurzen, erläuternden Texten versehen, sodass der Benutzer ohne intensives Studium einer Bedienungsanleitung die Stromquelle 2 betätigen kann. Je nach Funktion kann der Text oder das Piktogramm bzw. Symbol auch entfallen.

Mögliche Bedienbereiche in den Menüleisten 30 und deren Funktionen werden im Folgenden kurz beschrieben. Der oberste Bedienbereich der linken Menüleiste 30 betrifft den Menüpunkt "Schweißen", der im Fall der Durchführung eines Schweißprozesses ausgewählt wird. Der nächste Bedienbereich in der linken Menüleiste 30 mit den Symbolen für Schweißbrenner mit dem Textbestandteil "JOB" dient der Auswahl verschiedener Schweißverfahren, wie zum Beispiel Standardschweißverfahren, Pulsschweißverfahren, CMT (Cold Metal Transfer)-Schweißverfahren, usw. Der darunter angeordnete Bedienbereich in der linken Menüleiste 30 mit dem Symbol dreier Schieberegler dient der Einstellung der Prozessparameter. Bei Druck auf diesen Bedienbereich können verschiedene Prozessparameter eingestellt werden. Der unterste Bedienbereich der linken Menüleiste 30 mit dem Symbol eines Schweißgeräts mit einem Werkzeugschlüssel dient der Festlegung und Veränderung von Voreinstellungen des Schweißgeräts. Bei Auswahl dieses Bedienbereichs am Touchscreen 21 können verschiedene Grundeinstellungen, wie zum Beispiel die Art oder Farbe von Darstellungen, festgelegt werden.

In der rechten Menüleiste 30 des Touchscreens 21 ist der oberste Bedienbereich 31 mit dem Symbol des Parameter-Karussells (drei Rechtecke mit einem geschwungenen Pfeil) für die Veränderung der Parameter des Parameter-Karussells reserviert. Bei Auswahl dieses Bedienbereichs 31 erscheint ein entsprechendes Untermenü am Touchscreen 21, in welchem die Parameter, welche im Karussell angeordnet sind und deren Reihenfolge festgelegt werden kann. Der unterhalb angeordnete Bedienbereich mit dem Symbol einer Rechteckfunktion mit einem Haken dient dem Ein- und Ausschalten bestimmter Sonderfunktionen, wie zum Beispiel eines sogenannten Synchropulses. Mit dem dritten Bedienbereich in der rechten Menüleiste 30 mit dem Piktogramm eines geneigten Quadrats mit einem Pfeil können verschiedene Einstellungen als Schweißjob gespeichert werden, sodass diese Einstellungen für spätere Anwendungen zur Verfügung stehen. Schließlich ist der unterste Bedienbereich 32 der rechten Menüleiste 30 mit dem Symbol eines Rechtecks mit nach außen weisenden Pfeilen in den Ecken zur Umschaltung in den oben beschriebenen Vollbildmodus gedacht, in welchem die Menüleisten 30 ausgeblendet werden und der Hauptbereich 28 des Touchscreens 21 größer dargestellt wird (siehe Fig. 4) .

Natürlich können bei Auswahl eines Bedienbereichs an den Menüleisten 30 wieder neue Bedienbereiche mit neuen Unterfunktionen erscheinen, welche die Bedienung des Schweißgeräts 1 und die Vornahme von Änderungen der Parameter, Funktionen und dgl. erleichtern.

Fig. 4 zeigt eine Ansicht auf den Touchscreen 21 gemäß Fig. 3 im Vollbildmodus, welcher nach Betätigung eines entsprechenden Bedienbereichs 32 am Touchscreen 21 eingenommen wird. Im Vollbildmodus werden die in Fig. 3 seitlich dem Hauptbereich 28 dargestellten Menüleisten 30 ausgeblendet und der Hauptbereich 28 des Touchscreens 21 entsprechend größer dargestellt. Die Statuszeile 29 bleibt vorzugsweise eingeblendet, da sie dem Benutzer entsprechend wichtige Informationen wiedergibt. Der Vollbildmodus entspricht einem vereinfachten bzw. reduzierten Modus, in dem nur die wesentlichen Teile oder Parameter des Schweißprozesses am Touchscreen 21 dargestellt werden. Beispielsweise durch Berührung des Touchscreens 21 kann wieder in den Normalmodus zurückgekehrt werden, bei dem seitlich des Hauptbereichs 28 des Touchscreens 21 die Menüleisten 30 wieder eingeblendet und deren Funktionen betätigbar sind. In diesem Selektions-Modus können die Parameter ausgewählt werden.

In Fig. 5 ist der Touchscreen 21 im sogenannten Einstell-Modus dargestellt, wobei hier die Größe des Anzeigebereichs dem des Vollbildmodus entspricht. Der Einfachheit halber ist die Statuszeile 29, welche üblicherweise oberhalb dem Hauptbereich 28 des Touchscreens 21 angeordnet ist, hier nicht dargestellt. Dieser Einstell-Modus wird durch Betätigung des kombinierten Bedienelements 24, insbesondere Drücken des Druck-/Drehreglers, erreicht. Dabei wird eine Skala 33 mit dem einstellbaren Bereich des ausgewählten Parameters eingeblendet. Im dargestellten Ausführungsbeispiel ist der ausgewählte Parameter der Schweißstrom I, welcher zwischen 30 und 420 A eingestellt werden kann. Der Einstellbalken 34 zeigt den momentan eingestellten Wert für den Schweißstrom I an. Zusätzlich zum Einstellbalken 34 kann der Wert des Parameters auch in Zahlenform (hier 235 A) wiedergegeben werden. Durch Ziehen des Einstellbalkens 34 am Touchscreen 21 oder durch Drehen des kombinierten Bedienelements 24 kann der Wert für den Parameter (hier der Schweißstrom I) auf den gewünschten Wert eingestellt werden. Durch Berühren des Touchscreens 21 oder durch Drücken des kombinierten Bedienelements 24 wird wieder in den Vollbildmodus gemäß Fig. 4 zurückgekehrt.

Der einstellbare Bereich des Parameters, im gezeigten Fall zwischen 30 und 420A, ist dabei aufgrund unterschiedlicher zusätzlicher Parameter und/oder Funktionen variabel ausgebildet. Beispielsweise kann der einstellbare Bereich eines Parameters bei der selben Einstellung jedoch mit geänderter Materialauswahl von 30 bis 420A auf 20 bis 350A geändert werden. Dabei werden bestimmte Parameter für die Definition des jeweiligen einzustellenden Bereichs herangezogen. Auch können die eingebauten Komponenten, wie beispielsweise das verwendete Leistungsteil, das Drahtvorschubgerät, usw. den einstellbaren Bereich mitbestimmen. Beispielsweise ist bei der Verwendung eines Leistungsteils für 300A eine Anzeige eines Bereichs bis 420A nicht sinnvoll, da dieser Stromwert nicht eingestellt werden kann. Bei einem Tausch der Komponenten des Schweißgeräts werden also durch die für diese Komponenten hinterlegten Kennzahlen die Skalen, insbesondere die Einstellbereiche, für die Parameter definiert.

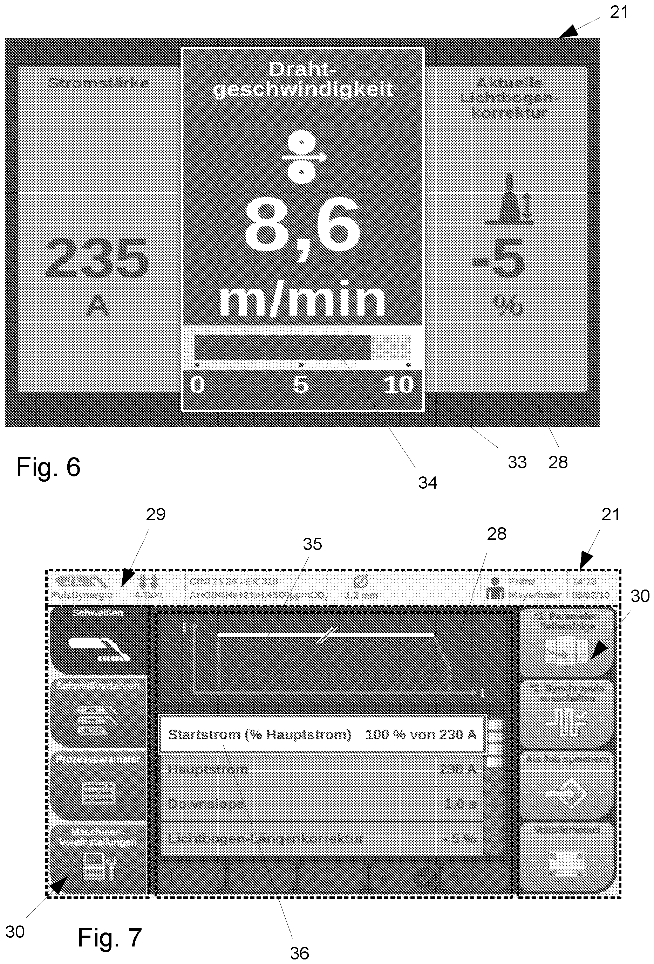

Fig. 6 zeigt eine weitere Ansicht auf den Touchscreen 21 im Einstell-Modus, wobei der Parameter der Fördergeschwindigkeit des Schweißdrahts dargestellt wird. Auch hier ist wieder die Statuszeile 29 oberhalb des Hauptbereichs 28 des Touchscreens 21 nicht dargestellt worden. Der Wertebereich, innerhalb welcher die Fördergeschwindigkeit des Schweißdrahts einstellbar ist, beläuft sich im dargestellten Beispiel zwischen 0 und 10 m/min. Der Einstellbalken 34 zeigt wiederum den aktuell eingestellten Wert (hier 8,6 m/min) für den Parameter an. Zusätzlich ist am Touchscreen 21 der eingestellte Wert auch als Zahl dargestellt.

Schließlich zeigt Fig. 7 den Touchscreen 21 des Schweißgeräts 1 im Kurvenansicht-Modus. Dabei kann durch entsprechende Auswahl eines Bedienbereichs in einer Menüleiste 30 am Touchscreen 21 der gerade ausgewählte Parameter in Form eines Zeit-Diagramms 35 grafisch dargestellt werden. Im gezeigten Beispiel wird der Parameter des Schweißstroms I in Abhängigkeit der Zeit t in einem Teil des Hauptbereichs 28 des Touchscreens 21 dargestellt. Unterhalb des Zeit-Diagramms 35 befindet sich noch eine Parameterliste 36, wobei der dargestellte und ausgewählte Parameter (hier des Schweißstroms) entsprechend hervorgehoben, beispielsweise eingerahmt, ist. Durch den zeitlichen Verlauf des Parameters (hier des Schweißstroms I) kann dem Benutzer in übersichtlicher Weise eine entsprechende Information über Veränderungen während des Schweißprozesses vermittelt werden.

Wesentlich ist hierbei, dass bei Abänderung eines Parameters der Benutzer die Auswirkungen sofort an der Kennlinie ablesen kann, da sich diese entsprechend der vorgenommenen Einstellung verändert.

Das vorliegende Schweißgerät 1 bietet über den Touchscreen 21 und das kombinierte Bedienelement 24 eine besonders flexible und bequem bedienbare Einstellmöglichkeit für den Benutzer bzw. Schweißer, welche besonders leicht an die jeweiligen Bedürfnisse anpassbar ist.

## Patentansprüche

1. Schweißgerät (1), mit einem Anschluss (27) für einen Schweißbrenner (7) zur Durchführung eines Schweißprozesses, einer Stromquelle (2) zur Versorgung des Schweißbrenners (7) mit einem Schweißstrom, einer Steuervorrichtung (4), einer mit der Steuervorrichtung (4) verbundenen und durch einen Touchscreen (21) gebildeten Ein-/Ausgabeeinrichtung (18) zur Ein-/Darstellung von für den Schweißprozess erforderlichen Parametern und Funktionen, welche an die Steuervorrichtung (4) zur Ansteuerung bzw. Vorgabe entsprechender Sollwerte für die Regelung oder Steuerung der einzelnen Komponenten des Schweißgerätes (1) weitergeleitet werden, **dadurch gekennzeichnet, dass** die Steuervorrichtung (4) zur sequentiellen und umlaufenden Ein-/Darstellung der Parameter des Schweißprozesses in einem Hauptbereich (28) des Touchscreens (21) in Form eines Parameter-Karussells ausgebildet ist, wobei die Parameter, die im Parameter-Karussell dargestellt werden, und deren Reihenfolge individuell festlegbar sind und der einstellbare Parameter des Schweißprozesses zentral im Hauptbereich (28) hervorgehoben dargestellt ist, dass die Steuervorrichtung (4) zur gleichzeitigen Darstellung zumindest eines vorausgehenden und zumindest eines nachfolgenden Parameters der Sequenz an Parametern des Schweißprozesses neben dem zentral dargestellten, einstellbaren Parameter im Hauptbereich (28) des Touchscreens (21) ausgebildet ist, dass eine transparente Schutzabdeckung (22) für den Touchscreen (21) vorgesehen ist, und dass im Bereich des Touchscreens (21) außerhalb der Schutzabdeckung (22) ein kombiniertes, durch einen Dreh-/Drückregler gebildetes, Bedienelement (24) zur Auswahl und Veränderung der Parameter und Funktionen des Schweißprozesses angeordnet ist, wobei durch Drehen des Dreh-/Drückreglers ein anderer Parameter bzw. eine andere Ansicht am Touchscreen auswählbar ist und der Wert eines Parameters stufenlos einstellbar ist und durch Druck auf den Dreh-/Drückregler die Auswahl bzw. der Wert eines Parameters bestätigbar ist, sodass die Parameter und Funktionen des Schweißprozesses über den Touchscreen (21) vor der Durchführung des Schweißprozesses als auch über das kombinierte Bedienelement (24) auch bei abgedecktem Touchscreen (21) durch den Benutzer auch mit Schweißhandschuhen einstellbar und veränderbar sind und die Parameter und Funktionen des Schweißprozesses während der Durchführung des Schweißprozesses überwachbar sind.

2. Schweißgerät (1) nach Anspruch 1, **dadurch gekennzeichnet, dass** der einstellbare Parameter größer als der zumindest eine vorausgehende und der zumindest eine nachfolgende Parameter der Sequenz am Touchscreen (21) dargestellt ist.

3. Schweißgerät (1) nach Anspruch 1 oder 2, **dadurch gekennzeichnet, dass** ein Bedienbereich (31) am Touchscreen (21) zur Änderung der Sequenz an Parametern am Touchscreen (21) vorgesehen ist.

4. Schweißgerät (1) nach einem der Ansprüche 1 bis 3, **dadurch gekennzeichnet, dass** ein Bedienbereich am Touchscreen (21) zur Darstellung eines ausgewählten Parameters als Kurvenverlauf in Abhängigkeit der Zeit vorgesehen ist.

5. Schweißgerät (1) nach einem der Ansprüche 1 bis 4, **dadurch gekennzeichnet, dass** am Touchscreen (21) eine vorzugsweise im oberen Bereich des Touchscreens (21) angeordnete Statuszeile (29) zur Darstellung des Status des Schweißprozesses, und zumindest eine vorzugsweise seitlich am Touchscreen (21) angeordnete Menüleiste (30) zur Darstellung von Bedienbereichen zur Auswahl von Parametern oder Vornahme von Einstellungen vorgesehen ist.

6. Schweißgerät (1) nach Anspruch 5, **dadurch gekennzeichnet, dass** am Touchscreen (21) ein Bedienbereich (32) zur Umschaltung auf einen Vollbildmodus, in welchem die zumindest eine Menüleiste (30) ausgeblendet ist und der Hauptbereich (28) des Touchscreen (21) vergrößert dargestellt ist, vorgesehen ist.

7. Schweißgerät (1) nach einem der Ansprüche 1 bis 6, **dadurch gekennzeichnet, dass** eine mit der Steuervorrichtung (4) verbundene Schnittstelle (26), vorzugsweise USB-Schnittstelle, vorgesehen ist, und dass die Schnittstelle (26) vorzugsweise im Bereich der Ein- und/oder Ausgabevorrichtung (18) angeordnet ist.

8. Schweißgerät (1) nach einem der Ansprüche 1 bis 7, **dadurch gekennzeichnet, dass** im Bereich des Touchscreens (21) zumindest eine Funktionstaste (25), insbesondere eine Taste zum Auslösen eines Vorgangs zum Einfädeln eines Schweißdrahts (9) und eine Taste zum Auslösen eines Vorgangs zum Prüfen der benötigten Menge eines Schutzgases (5), vorgesehen ist.

9. Schweißgerät (1) nach einem der Ansprüche 1 bis 8, **dadurch gekennzeichnet, dass** die Steuervorrichtung (4) zur Darstellung einer Skala (33) jenes Bereichs, innerhalb welchem der Parameter einstellbar ist, ausgebildet ist.

10. Schweißgerät (1) nach Anspruch 9, **dadurch gekennzeichnet, dass** die Skala (33) an die eingestellten Parameter des Schweißprozesses und bzw. oder an eingesetzte Komponenten des Schweißgeräts (1), insbesondere die Stromquelle (2), angepasst ist.

11. Schweißgerät (1) nach einem der Ansprüche 1 bis 10, **dadurch gekennzeichnet, dass** ein Speicher zum Speichern der eingestellten Parameter eines Schweißjobs zusammen mit einer eindeutigen Identifikation für den Schweißjob vorgesehen ist.

12. Schweißgerät (1) nach einem der Ansprüche 1 bis 11, **dadurch gekennzeichnet, dass** der Touchscreen (21) an der Stromquelle (2) und bzw. oder einer Komponente des Schweißgeräts (1), insbesondere einem Drahtvorschubgerät (8), einem Fernregler, usw., angeordnet ist.

## Claims

1. Welding unit (1) comprising a connection (27) for a welding torch (7) for performing a welding process, a power source (2) for supplying the welding torch (7) with a welding current, a control device (4), and an input/output device (18), connected to the control device (4) and formed by a touchscreen (21), for setting/displaying parameters and functions required for the welding process, which parameters and functions are forwarded to the control device (4) for selecting or specifying corresponding target values for regulating or controlling the individual components of the welding unit (1), **characterised in that** the control device (4) is designed in form of a parameter carousel in a main area (28) of the touchscreen (21), for sequentially and circumferentially setting/displaying the parameters of the welding process, the parameters that are displayed in the parameter carousel, and the order of which can be individually specified, and the settable parameter of the welding process being displayed centrally and in a highlighted manner in the main area (28), **in that** the control device (4) is designed for simultaneously displaying, in the main area (28) of the touchscreen (21), at least one preceding parameter and at least one succeeding parameter of the sequence of parameters of the welding process next to the centrally displayed, settable parameter, **in that** a transparent protective cover (22) is provided for the touchscreen (21), and **in that** a combined control element (24), formed by a rotary/push controller, for selecting and changing the parameters and functions of the welding process is arranged in the region of the touchscreen (21) outside the protective cover (22), it being possible to select another parameter and/or another view on the touchscreen by rotating the rotary/push controller, the value of a parameter being continuously settable, and it being possible to confirm the selection and/or the value of a parameter by means of pressure on the rotary/push controller, such that the user, even when wearing gloves, can set and change the parameters and functions of the welding process via the touchscreen (21) before carrying out the welding process, and also via the combined control element (24) even when the touchscreen (21) is covered, and it being possible to monitor the parameters and functions of the welding process while the welding process is being carried out.

2. Welding unit (1) according to claim 1, **characterised in that** the settable parameter is displayed larger on the touchscreen (21) than the at least one preceding parameter and the at least one succeeding parameter of the sequence.

3. Welding unit (1) according to either claim 1 or 2, **characterised in that** a control area (31) for changing the sequence of parameters on the touchscreen (21) is provided on the touchscreen (21).

4. Welding unit (1) according to any of claims 1 to 3, **characterised in that** a control area for displaying a selected parameter as a progression of a curve as a function of time is provided on the touchscreen (21).

5. Welding unit (1) according to any of claims 1 to 4, **characterised in that** a status line (29), preferably arranged in the upper region of the touchscreen (21), for displaying the status of the welding process, and at least one menu bar (30), preferably arranged at the side of the touchscreen (21), for displaying control areas for selecting parameters or making settings, are provided on the touchscreen (21).

6. Welding unit (1) according to claim 5, **characterised in that** a control area (32) for switching to a full-screen mode in which the at least one menu bar (30) is hidden and the main area (28) of the touchscreen (21) is enlarged is provided on the touchscreen (21).

7. Welding unit (1) according to any of claims 1 to 6, **characterised in that** an interface (26), preferably a USB interface, that is connected to the control device (4), is provided, and **in that** the interface (26) is preferably arranged in the region of the input and/or output device (18).

8. Welding unit (1) according to any of claims 1 to 7, **characterised in that** at least one function key (25), in particular a key for triggering a process for threading a welding wire (9) and a key for triggering a process for checking the required amount of a shielding gas (5) is provided in the region of the touchscreen (21).

9. Welding unit (1) according to any of claims 1 to 8, **characterised in that** the control device (4) is designed to display a scale (33) of the range within which the parameter can be set.

10. Welding unit (1) according to claim 9, **characterised in that** the scale (33) conforms to the set parameters of the welding process, and/or to components of the welding unit (1) that are used, in particular the power source (2).

11. Welding unit (1) according to any of claims 1 to 10, **characterised in that** a memory for storing the set parameters of a welding job, together with an unique identification for the welding job, is provided.

12. Welding unit (1) according to any of claims 1 to 11, **characterised in that** the touchscreen (21) is arranged on the power source (2) and/or on a component of the welding unit (1), in particular on a wire feeding device (8), a remote control, etc.

## Revendications

1. Appareil de soudage (1), avec une connexion (27) pour un chalumeau (7) destiné à la réalisation d'un processus de soudage, une source de courant (2) destinée à l'alimentation du chalumeau (7) avec un courant de soudage, un dispositif de commande (4), un équipement d'entrée/de sortie (18), raccordé au dispositif de commande (4) et formé par un écran tactile (21), destiné au réglage / à la représentation de paramètres et de fonctions qui sont nécessaires pour le processus de soudage et qui sont transmis au dispositif de commande (4) pour le pilotage ou respectivement la spécification de valeurs de consigne correspondantes pour la régulation ou la commande des différents composants de l'appareil de soudage (1), **caractérisé en ce que**, pour le réglage / la représentation séquentiels et continus des paramètres du processus de soudage, le dispositif de commande (4) est constitué dans une zone principale (28) de l'écran tactile (21) sous la forme d'un carrousel de paramètres, les paramètres qui sont représentés dans le carrousel de paramètres et leurs séquence pouvant être stipulés individuellement, et le paramètre réglable du processus de soudage étant représenté en étant mis en valeur de façon centrale dans la zone principale (28), **en ce que**, pour la représentation simultanée d'au moins un paramètre précédent et d'au moins un paramètre suivant de la séquence de paramètres du processus de soudage, le dispositif de commande (4) est constitué dans la zone principale (28) de l'écran tactile (21) à côté du paramètre réglable représenté de façon centrale, **en ce qu'**une couverture de protection (22) transparente est prévue pour l'écran tactile (21), et **en ce que**, dans la zone de l'écran tactile (21), à l'extérieur de la couverture de protection (22), il est disposé un élément de commande (24) combiné, formé par un régulateur rotatif/à poussoir, destiné à la sélection et à la modification des paramètres et fonctions du processus de soudage, la rotation du régulateur rotatif/à poussoir permettant de sélectionner un autre paramètre ou respectivement une autre vue sur l'écran tactile, et la valeur d'un paramètre pouvant être réglée en continu, et la pression sur le régulateur rotatif/à poussoir permettant de confirmer la sélection ou respectivement la valeur d'un paramètre de telle sorte que les paramètres et fonctions du processus de soudage peuvent être réglés et modifiés par l'utilisateur, même avec des gants de soudage, par le biais le biais de l'écran tactile (21) avant la réalisation du processus de soudage ainsi que par le biais de l'élément de commande (24) combiné même quand l'écran tactile (21) est recouvert, et les paramètres et fonctions du processus de soudage peuvent être surveillés pendant la réalisation du processus de soudage.

2. Appareil de soudage (1) selon la revendication 1, **caractérisé en ce que** le paramètre réglable est représenté plus grand sur l'écran tactile (21) que le paramètre précédent au moins au nombre de un et que le paramètre suivant au moins au nombre de un de la séquence.

3. Appareil de soudage (1) selon la revendication 1 ou 2, **caractérisé en ce qu'**une zone de commande (31) est prévue sur l'écran tactile (21) pour la modification de séquence de paramètres sur l'écran tactile (21).

4. Appareil de soudage (1) selon l'une des revendications 1 à 3, **caractérisé en ce qu'**une zone de commande est prévue sur l'écran tactile (21) pour la représentation d'un paramètre sélectionné en tant que tracé de courbe en fonction du temps.

5. Appareil de soudage (1) selon l'une des revendications 1 à 4, **caractérisé en ce que**, sur l'écran tactile (21), il est prévu une ligne de statut (29) disposée de préférence dans la zone supérieure de l'écran tactile (21) en vue de la représentation du statut du processus de soudage, et au moins une barre de menu (30) disposée de préférence latéralement sur l'écran tactile (21) en vue de la représentation de zones de commande pour la sélection de paramètres ou pour la réalisation de réglages.

6. Appareil de soudage (1) selon la revendication 5, **caractérisé en ce que**, sur l'écran tactile (21), il est prévu une zone de commande (32) destinée à la commutation vers un mode plein écran dans lequel la barre de menu (30) au moins au nombre de un est occultée et la zone principale (28) de l'écran tactile (21) est représentée de façon agrandie.

7. Appareil de soudage (1) selon l'une des revendications 1 à 6, **caractérisé en ce qu'**il est prévue une interface (26) raccordée au dispositif de commande (4), de préférence une interface USB, et **en ce que** l'interface (26) est de préférence disposée dans la zone du dispositif d'entrée/de sortie (18).

8. Appareil de soudage (1) selon l'une des revendications 1 à 7, **caractérisé en ce que**, dans la zone de l'écran tactile (21), il est prévu au moins une touche de fonction (25), en particulier une touche destinée au déclenchement d'un processus d'enfilage d'un fil de soudage (9) et une touche destinée au déclenchement d'un processus d'examen de la quantité nécessaire d'un gaz inerte (5).

9. Appareil de soudage (1) selon l'une des revendications 1 à 8, caractérisé en ce le dispositif de commande (4) est constitué pour la représentation d'une échelle (33) de chaque zone à l'intérieur de laquelle le paramètre peut être réglé.

10. Appareil de soudage (1) selon la revendication 9, **caractérisé en ce que** l'échelle (33) est adaptée aux paramètres réglés du processus de soudage et respectivement ou à des composants utilisés de l'appareil de soudage (1), en particulier la source de courant (2).

11. Appareil de soudage (1) selon l'une des revendications 1 à 10, **caractérisé en ce qu'**il est prévu une mémoire pour le stockage des paramètres réglés d'une tâche de soudage conjointement avec une identification claire de la tâche de soudage.

12. Appareil de soudage (1) selon l'une des revendications 1 à 11, **caractérisé en ce que** l'écran tactile (21) est disposé sur la source de courant (2) et respectivement ou sur un composant de l'appareil de soudage (1), en particulier un dévidoir de fil (8), un appareil de réglage à distance, etc.
